# EUROPÄISCHE PATENTSCHRIFT

(11) **EP 3 589 524 B1**
(45) Veröffentlichungstag und Bekanntmachung des Hinweises auf die Patenterteilung: **15.12.2021**
(21) Anmeldenummer: 18702630.7
(22) Anmeldetag: 22.01.2018
(51) Int. Cl.: B61D 23/02, B60R 3/02

(54) **SCHIEBETRITTANORDNUNG FÜR EIN KRAFTFAHRZEUG ODER FÜR EIN SCHIENENFAHRZEUG**
SLIDING STEP ASSEMBLY FOR A MOTOR VEHICLE OR FOR A RAIL VEHICLE
ENSEMBLE MARCHEPIED COULISSANTE POUR VÉHICULE AUTOMOBILE OU POUR VÉHICULE FERROVIAIRE

(30) Priorität: 03.03.2017 DE 102017002018
(43) Veröffentlichungstag der Anmeldung: 08.01.2020
(73) Patentinhaber: Knorr-Bremse Gesellschaft mit beschränkter Haftung, 2340 Mödling (AT)
(72) Erfinder: PEHAM, Markus, 3370 Ybbs (AT)
(74) Vertreter: Wiedemann, Markus
(86) Internationale Anmeldenummer: PCT/EP2018/051392
(87) Internationale Veröffentlichungsnummer: WO 2018/158000

(56) Entgegenhaltungen:
- EP-A2- 1 029 523
- WO-A1-2004/085222
- DE-A1- 3 708 498
- DE-A1-102008 061 852
- DE-A1-102014 208 288

## Beschreibung

Die Erfindung geht aus von einer Schiebetrittanordnung für ein Fahrzeug oder ein Schienenfahrzeug zur Überbrückung eines Spalts zwischen dem Fahrzeug oder Schienenfahrzeug und einem Bahnsteig oder dergleichen gemäß dem Oberbegriff von Anspruch 1.

Weiterhin betrifft die Erfindung auch Fahrzeug, insbesondere ein Schienenfahrzeug mit wenigstens einer Schiebetrittanordnung gemäß Anspruch 14.

Eine solche Schiebetrittanordnung ist beispielsweise aus DE 37 08 498 A1 sowie aus DE 10 2008 961 852 B4 bekannt. Beispielsweise werden solche Schiebetrittanordnungen bei Fahrzeugen zur Personenbeförderung eingesetzt, um den Zu- und Ausstieg zu erleichtern und um eine Gefährdung von Personen zu vermeiden. Dabei kann der Schiebetritt mit Hilfe eines Antriebs zwischen einer eingefahrenen Position (Ruhestellung) und einer ausgefahrenen Position (Arbeitsstellung) hin- und her bewegt werden kann und ist hierzu beispielsweise an zwei parallel zueinander angeordneten Schienen der Führungseinrichtung geführt. Üblicherweise geschieht die Führung des Schiebetritts über Rollen.

Beispielsweise bei einem Schienenfahrzeug dient der Schiebetritt der Schiebetrittanordnung zur Überbrückung des Spalts zwischen dem Schienenfahrzeug und einem Bahnsteig, wenn das Schienenfahrzeug in einem Bahnhof hält. Damit wird verhindert, dass Passagiere in den betreffenden Spalt hineintreten. Auch kann der Schiebetritt bei Omnibussen dazu dienen, den Spalt zwischen Fahrzeug und einer Bordsteinkante abzudecken. Der Schiebetritt kann auch dazu dienen, einen Niveauunterschied zwischen einer Plattform des Fahrzeugs und dem Bahnsteig oder Gehsteig zu überbrücken, um einen Zu- und Ausstieg mit Rollstühlen und Kinderwagen zu erleichtern. Nicht zuletzt kann eine solche Schiebetrittanordnung auch bei Fahrzeugen zur Beförderung von kranken oder behinderten Personen eingesetzt werden, etwa, um durch den ausgefahrenen Schiebetritt einen Fahrweg für eine fahrbare Krankentrage oder einen Rollstuhl zwischen einer Fahrzeugplattform und einer Straße oder einem Gehweg zu bilden. Der Schiebetritt bildet daher in der ausgefahrenen Position eine begehbare Fläche zwischen Fahrzeug und Bahnsteig und dient als Einstiegshilfe für Fahrgäste beim Betreten bzw. Verlassen des Fahrzeugs.

Als Antrieb für den Schiebetritt werden Riementreibe, Spindeltriebe oder Pneumatikzylinder verwendet. Durch Verschmutzung, Vereisung, Verformung der Fahrzeugstruktur im Bereich der Schiebetrittanordnung oder infolge von Temperatureinflüssen kann es jedoch zu einem Blockieren eines solchen Antriebs oder des Schiebetritts in seiner Führung kommen, so dass die Schiebetrittanordnung funktionsunfähig wird. Um ein Eintreten von Schmutz, Feuchtigkeit, Eis und Schnee in die Schiebetrittkassette zumindest in der eingefahrenen Position des Schiebetritts zu verhindern, wird gemäß DE 10 2008 961 852 B4 eine am Schiebetritt gelagertes Dichtung als Verschlusselement vorgeschlagen, welches die Kassettenöffnung in der eingefahrenen Position des Schiebetritts verschließt.

Ein anderes Problem besteht darin, dass es während eines Halts des Fahrzeuges bei ausgeschobenem Schiebetritt zu einer Höhenänderung des Schiebetritts kommen kann. Dies kann durch Nachgeben der Federung, durch Änderung der Fahrzeugbeladung beim Ein- und Aussteigen von Fahrgästen, durch wechselnde Windlast oder Ähnliches geschehen. Die größtmögliche Höhenänderung ist dabei durch verschiedene Parameter des Fahrzeuges (Art der Federung, Position der Anschläge, Länge der Hebelarme des Schiebetritts bezüglich einer Schwenkachse, etc.) festgelegt. Durch die Änderung der Höhenlage des Schiebetritts kann es dazu kommen, dass Gepäck oder Passagiere eingeklemmt werden, oder der Schiebetritt bzw. die Schiebetrittanordnung beschädigt wird, wenn sich der Schiebetritt entsprechend absenkt.

Nicht zuletzt gelangt der Schiebetritt je nach der Positionierung am Fahrzeugkasten zumeist gegen Ende seiner Ausfahrbewegung z.B. in den Bereich eines Bahnsteigs, eines Bordsteins oder eines anderen Hindernisses und es besteht dabei die Gefahr, dass er seitlich in die vertikal verlaufende Bahnsteigwand bzw. Bordsteinwand fährt. Diesem Problem wird durch Sensoren einer Hinderniserkennungseinrichtung begegnet, welche ebenfalls z.B. in DE 10 2008 961 852 B4 beschrieben wird. Die bekannte Hinderniserkennungseinrichtung weist einen als Stromdetektor ausgebildeten Sensor auf, der so ausgebildet ist, dass er ein Hindernis aufgrund einer erhöhten aufzubringenden Leistung bei Berührung des Hindernisses durch den Schiebetritt erfasst und ein Erfassungssignal an die Motorsteuerung übermittelt. Die Motorsteuerung stoppt dann den Schiebetritt, bevor dieser seine vollständig ausgefahrene Position erreichen kann. Jedoch hat dann bereits ein eigentlich zu vermeidender Kontakt zwischen dem Schiebetritt und dem Hindernis stattgefunden. Der vorliegenden Erfindung liegt die Aufgabe zugrunde, eine Schiebetrittanordnung für ein Kraftfahrzeug oder für ein Schienenfahrzeug der eingangs erwähnten Art derart weiter zu bilden, dass die oben beschriebenen Probleme vermieden werden. Gleichfalls soll auch ein Fahrzeug, insbesondere ein Schienenfahrzeug mit einer solchen Schiebetrittanordnung zur Verfügung gestellt werden.

Diese Aufgabe wird erfindungsgemäß durch die Merkmale der Ansprüche 1 und 14 gelöst. Vorteilhafte Weiterbildungen der Erfindung sind Gegenstand der beigefügten Unteransprüche.

### Offenbarung der Erfindung

Die Erfindung geht von einer Schiebetrittanordnung für ein Kraftfahrzeug oder für ein Schienenfahrzeug, mit
a) einer an einem Fahrzeugkasten des Fahrzeugs oder Schienenfahrzeugs befestigbaren Schiebetrittkassette mit einer Kassettenöffnung,
b) einem an der Schiebetrittkassette entlang eines Schiebetrittfahrwegs zwischen einer eingefahrenen Position und mindestens einer ausgefahrenen Endposition beweglich geführten Schiebetritt, welcher in der eingefahrenen Position in der Schiebetrittkassette aufgenommen und mit Hilfe einer Antriebseinrichtung aus der eingefahrenen Position durch die Kassettenöffnung in die mindestens eine ausgefahrene Endposition ausfahrbar und aus der mindestens einen ausgefahrenen Endposition in die eingefahrene Position einfahrbar ist,
c) wenigstens einem am Schiebetritt gelagerten Verschlusselement, welches die Kassettenöffnung in der eingefahrenen Position des Schiebetritts verschließt.

Daher wird der Schiebetritt mit Hilfe der Antriebseinrichtung zwischen der eingefahrenen Position (Ruhestellung) und der ausgefahrenen Position (Arbeitsstellung) hin- und her bewegt, kann aber auch an einer beliebigen, zwischen der eingefahrenen Position (Ruhestellung) und der vollständig ausgefahrenen Endposition (Arbeitsstellung) gelegenen Endposition gestoppt und dort gehalten werden. In der Eingefahrenen Position ist der Schiebetritt bevorzugt vollständig in der Schiebetrittkassette aufgenommen und ragt nicht durch die Kassettenöffnung heraus. Der bevorzugte Einsatz der Schiebetrittanordnung ist in einem Schienenfahrzeug. darunter ist ein spurgebundenes Fahrzeug zu verstehen, wie eine Lokomotive, ein Triebzug, ein Treibwagen, eine Straßenbahn, ein U-Bahnfahrzeug, ein Waggon wie ein Personen- bzw. Reisezug und/oder Güterwagen, insbesondere ein Hochgeschwindigkeits-Schienenfahrzeug. Alternativ kann die Schiebetrittanordnung für jede andere Art von Fahrzeug eingesetzt werden, welche insbesondere für einen Transport von Personen vorgesehen sind, beispielsweise auch für Omnibusse, Krankentransportfahrzeuge, Behindertentransportfahrzeuge etc..

Die Erfindung ist durch folgende Merkmale gekennzeichnet:
d) einer wenigstens ein taktiles Element aufweisenden Hinderniserfassungseinrichtung, wobei die Hinderniserfassungseinrichtung derart ausgebildet ist, dass bei einer Berührung des taktilen Elements mit einem Hindernis im Laufe der Ausfahrbewegung des Schiebetritts von der eingefahrenen Position in die mindestens eine ausgefahrene Endposition eine kritische Position des Schiebetritts in Bezug auf das Hindernis erkannt und bei einem solchen Erkennen ein Erfassungssignal erzeugt wird, und
e) das Verschlusselement und das taktile Element zusammen durch eine mittels einer Führungseinrichtung derart beweglich geführten Klappe gebildet werden, dass die Lage der Klappe relativ zum Schiebetritt und/oder zur Schiebetrittkassette abhängig von der Position des Schiebetritts auf dem Schiebetrittfahrweg ist, wobei
f) die Führungseinrichtung derart ausgebildet ist, dass infolge eines Einfahrens des Schiebetritts in die eingefahrene Position die Klappe in eine Schließposition bringbar ist, in welcher die Klappe die Schiebetrittöffnung in der eingefahrenen Position verschließt und infolge eines Ausfahrens aus der eingefahrenen Position die Klappe eine Erfassungsposition einnimmt, in welcher sich wenigstens ein Abschnitt der Klappe innerhalb eines Erfassungsraums befindet, um eventuell in den Erfassungsraum ragende Hindernisse zu kontaktieren und dann bei einem Kontakt mit dem Hindernis das Erfassungssignal zu erzeugen.

Die Klappe ist dabei bevorzugt am Schiebetritt beweglich gelagert.

Mit anderen Worten sind das Verschlusselement und das taktile Element in einem Element, welches aber nicht als einstückiger Körper ausgeführt zu sein braucht sondern auch aus mehreren Teilen bestehen kann, nämlich einer durch eine Führungseinrichtung beweglich geführten Klappe zusammengefasst, wobei die Klappe im Sinne einer vorteilhaften Doppelfunktion dann einerseits in der Schließposition als Verschlusselement die Kassettenöffnung der Schiebetrittkassette verschließt und andererseits in einer von der eingefahrenen Position des Schiebtritts abweichenden ausgefahrenen Position als taktiles Element ein im Erfassungsraum befindliches oder in diesen teilweise hineinragendes Hindernis kontaktieren kann, wobei im Falle eines solchen Kontakts die Hinderniserfassungseinrichtung das Erfassungssignal erzeugt. Ohne einen solchen Kontakt erzeugt die Hinderniserfassungseinrichtung indes kein Erfassungssignal.

Der Erfassungsraum kann allgemein unterhalb des Schiebetritts und/oder vor dem Schiebetritt angeordnet sein. Dabei kann der Erfassungsraum auch ein freies Ende des Schiebetritts ein Stück weit überragen.

In besonders bevorzugter Weise ist der Erfassungsraum unterhalb des Schiebetritts angeordnet und überragt den Schiebetritt, d.h. dessen stirnseitiges freies Ende in Richtung Ausfahren aus der Schiebetrittkassette ein Stück weit. Dann können während des Ausfahrens des Schiebetritts aus der eingefahrenen Position unterhalb des Schiebetritts und vor dem Schiebetritt befindliche Hindernisse von der dann in Erfassungsposition befindlichen Klappe durch Kontakt erfasst werden. Denn wie oben bereits beschrieben, stellen Hindernisse innerhalb einer gewissen Distanz unterhalb des Schiebetritts und vor der Stirnseite des Schiebetritts eine kritische Situation dar, die es zu vermieden gilt.

Den Erfassungsraum, die Erfassungsposition, die Schließposition und das Material der Klappe, deren Abmessungen und Führung durch die Führungseinrichtung legt der Fachmann anhand von Versuchen fest und passt diese an die jeweiligen Gegebenheiten an.

Bevorzugt wirkt dann die Hinderniserkennungseinrichtung mit der Antriebseinrichtung derart zusammen, dass nach einer Erzeugung des Erfassungssignal die Antriebseinrichtung angesteuert wird, um den Schiebetritt in einer in Bezug auf das erfasste Hindernis unkritischen Position zu halten oder in eine unkritische Position zu bringen. Eine kritische Position des Schiebetritts stellt wie oben beschrieben eine Position dar, in welcher eine Kollision des Schiebetritts mit dem Hindernis droht oder zu erwarten ist. Eine unkritische Position des Schiebetritts lässt hingegen keine Kollision des Schiebetritts mit dem Hindernis erwarten.

Durch die Unteransprüche sind vorteilhafte Weiterbildungen der in Anspruch 1 angegebenen Erfindung möglich.

Die Klappe kann durch eine Platte gebildet werden, die einteilig oder mehrteilig ausgeführt sein kann.

Bevorzugt ist die Führungseinrichtung ausgebildet , dass das Einfahren des Schiebetritts in die Schiebetrittkassette eine Bewegung der Klappe aus der Erfassungsposition in die Schließposition und das Ausfahren des Schiebetritts aus der Schiebetrittkassette eine Bewegung der Klappe aus der Schließposition in die Erfassungsposition zumindest initiiert, d.h. einleitet. Beispielsweise kann eine der genannten Bewegungen der Klappe oder können beide genannten Bewegungen der Klappe auch vollständig auf der Einfahrbewegung und/oder Ausfahrbewegung des Schiebetritts beruhen. Die Führungseinrichtung stellt ein Getriebe dar, welches eine Translationsbewegung des Schiebetritts in eine Bewegung der Klappe wandelt, insbesondere in eine Drehbewegung.

Bevorzugt beinhaltet die Führungseinrichtung eine exzentrische Drehlagerung der Klappe am Schiebetritt sowie eine Kulissenführung der Klappe am Schiebetritt derart, dass
a) beim Ausfahren des Schiebetritts in die mindestens eine ausgefahrene Endposition die Klappe von der Schließposition in die Erfassungsposition schwenkt, und dass
b) beim Einfahren des Schiebetritts in die eingefahrene Position die Klappe durch die Kulissenführung in die Schließposition schwenkt.

Bevorzugt wird das Schwenken der Klappe von der Schließposition in die Erfassungsposition (auch) infolge von Eigengewichtskräften bewerkstelligt, welche von der exzentrischen Drehlagerung der Klappe am Schiebetritt herrühren. Alternativ oder zusätzlich könnte die Bewegung der Klappe von der Schließposition in die Erfassungsposition und zurück auch durch einen mittelbaren oder unmittelbaren Antrieb der Klappe durch eine Antriebseinrichtung oder die Antriebseinrichtung erfolgen, welche auch für die Ein- und Ausfahrbewegung des Schiebetritts sorgt. Weiterhin kann auch das Schwenken der Klappe von der Schließposition in die Erfassungsposition durch eine Fremdkrafteinwirkung von außen initiiert ("Schubs"), und dann infolge von Eigengewichtskräften der Klappe zu Ende geführt werden. Umgekehrt stammt die Energie zum Schwenken der Klappe von der Erfassungsposition in die Schließposition von der Antriebseinrichtung des Schiebetritts als die Bewegung des Schiebetritts beim Einfahren in die Schiebetrittkassette mittels der Kulissenführung in eine Schwenkbewegung der Klappe gewandelt wird, wodurch diese von der Erfassungsposition in die Schließposition schwenkt.

Anstatt einer Kulissenführung kann jegliche Getriebe verwendet werden, durch welches die Klappe beim Einfahren in die Schiebetrittkassette von der Erfassungsposition in die Schließposition geschwenkt wird. Dabei kann die Energie der Antriebseinrichtung des Schiebetritts genutzt werden oder aber auch ein eigene Antriebseinrichtung.

Gemäß einer Weiterbildung beinhaltet die Kulissenführung wenigstens eine an der Klappe gelagerten Vorsprung und wenigstens eine an der Schiebetrittkassette angeordnete Kulisse, wobei
a) beim Einfahren des Schiebetritts in die eingefahrene Position der Vorsprung in die Kulisse eintaucht und dadurch die Klappe um eine Drehachse der exzentrischen Drehlagerung in die Schließposition gedreht wird, und wobei
b) beim Ausfahren des Schiebetritts aus der eingefahrenen Position der Vorsprung aus der Kulisse austaucht und dadurch die Klappe in die Erfassungsposition schwenkt.

Bevorzugt schwenkt die Klappe beim Ausfahren des Schiebetritts aus der eingefahrenen Position in die Erfassungsposition infolge von Eigengewichtskräften und/oder infolge von Fremdkräften, welche beispielsweise durch eine Antriebseinrichtung aufgebracht werden.

Bevorzugt beinhaltet der wenigstens eine an der Klappe gelagerte Vorsprung eine an der Klappe drehbar gelagerte Rolle, welche dann mit der Kulisse zusammen wirkt. Die wenigstens eine Rolle ist beispielsweise an einem Lenker angeordnet, welcher über die Drehlagerung am Schiebetritt drehbar gelagert ist und andererseits die Klappe trägt.

Die Kulisse kann dann an einer Innenwand der Schiebetrittkassette derart angeordnet sein, dass der Vorsprung bzw. die Rolle mit einem Einlauf der Kulisse dann fluchtet, wenn sich der Schiebetritt kurz vor dem Einfahren in die eingefahrene Position und die Klappe dabei (noch) in der Erfassungsposition befindet. Dann kann beim weiteren Einfahren des Schiebetritts in die Schiebetrittkassette der Vorsprung bzw. die Rolle über den Einlauf in die Kulisse eingeführt werden, um mittels weiterer Führung der Kulisse dann die Klappe in die Schließposition zu schwenken.

Die Hinderniserfassungseinrichtung kann wenigstens ein mit der Klappe gekoppeltes Sensorelement aufweisen, welches eine Bewegung der Klappe infolge eines Kontakts mit dem Hindernis erkennt. Beispielsweise misst das Sensorelement den Drehwinkel zwischen der Klappe und dem Schiebetritt. Wenn dann dieser gemessene Drehwinkel einen vorgegebenen Grenzwinkel überschreitet, dann stellt dies ein Indiz für eine Kollision oder einen Kontakt der Klappe mit einem Hindernis im Erfassungsraum dar.

Der Schiebetritt ist bevorzugt an der Schiebetrittkassette durch eine Schiebetrittführungseinrichtung geführt, um zwischen der eingefahrenen Position und der ausgefahrenen Position bewegt werden zu können. Insbesondere kann der Schiebetritt durch die Schiebetrittführungseinrichtung entlang eines geraden oder gebogenen Schiebetrittfahrwegs geführt sein.

Bevorzugt kann zur Abdichtung der durch die Klappe geschlossenen Kassettenöffnung an einem Rand der Kassettenöffnung und/oder an der Klappe wenigstens ein Dichtungselement angeordnet sein, welches den Rand der Kassettenöffnung gegen die Klappe dichtet.

Die Erfindung betrifft auch ein Fahrzeug, insbesondere ein Schienenfahrzeug mit wenigstens einer oben beschriebenen Schiebetrittanordnung.

### Zeichnung

Die Erfindung wird nachstehend anhand eines Ausführungsbeispiels unter Bezugnahme auf die beigefügte Zeichnung näher beschrieben. Es zeigen:
- Fig.1: eine stark schematisierte Seitenansicht auf ein Schienenfahrzeug mit einer Schiebetrittanordnung mit einem Schiebetritt gemäß einer bevorzugten Ausführungsform der Erfindung;
- Fig.2: eine Vorderansicht der Schiebetrittanordnung von Fig.1 ;
- Fig.3: eine Seitenansicht der Schiebetrittanordnung von Fig.1 mit dem Schiebetritt in einer eingefahrenen Position und einer Klappe in Schiießposition;
- Fig.4: eine Seitenansicht der Schiebetrittanordnung von Fig.1 mit dem Schiebetritt in einer teilweise ausgefahrenen Position und der Klappe in Erfassungsposition;
- Fig.5: eine Seitenansicht der Schiebetrittanordnung von Fig.1 mit dem Schiebetritt in einer ausgefahrenen Endposition und der Klappe in Erfassungsposition.

### Beschreibung des Ausführungsbeispiels

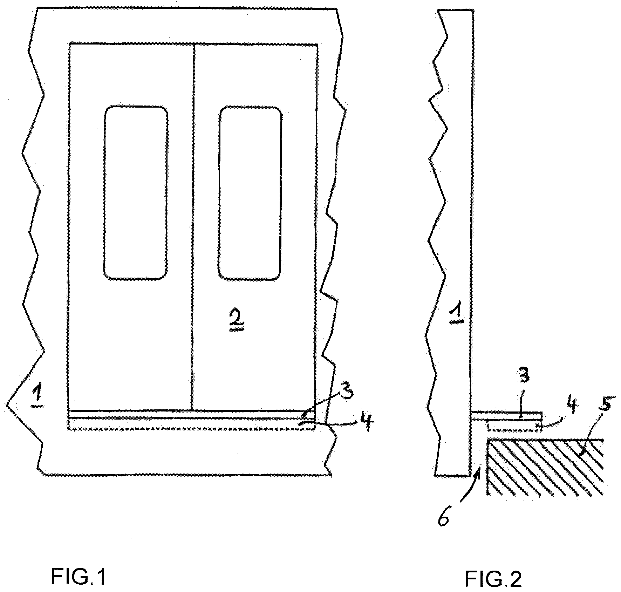

**Fig.1** zeigt ein Schienenfahrzeug 1 für Personenbeförderung als bevorzugtes Fahrzeug mit einer zweiflügeligen Tür 2 und einem Schiebetritt 3 einer Schiebetrittanordnung 7. Unterhalb der Schiebetritts 3 ist mit gestrichelten Linien ein Erfassungsraum 4 dargestellt, d.h. ein Raum, der von einer Hinderniserfassungseinrichtung 8 der Schiebetrittanordnung 7 während des Ausfahrens des Schiebetritts 3 aus einer in Fig.1 und Fig.2 nicht dargestellten Schiebetrittkassette 10 auf Kollisions- bzw. Einklemmgefahr überwacht werden soll. Die Positionierung und Bedeutung dieses Erfassungsraums 4 wird aus einer Zusammenschau der **Fig.1** und **Fig.2** ersichtlich. Der Erfassungsraum 4 ist bevorzugt unterhalb des Schiebetritts 3 angeordnet.

In **Fig.2** ist ein Bahnsteig 5 eingezeichnet, wie er bezüglich des Fahrzeuges 1 mit seiner Oberfläche und seiner Seitenwand verläuft. Zwischen dem Bahnsteig 5 und dem Fahrzeug 1 besteht ein Spalt 6, welcher in manchen Fällen, z.B. bei Bahnsteigen mit gebogenen Gleisabschnitten auch breiter als im gezeigten Ausführungsbeispiel sein kann und zu dessen gefahrloser Überwindung durch Personen der Schiebetritt 3 vorgesehen ist.

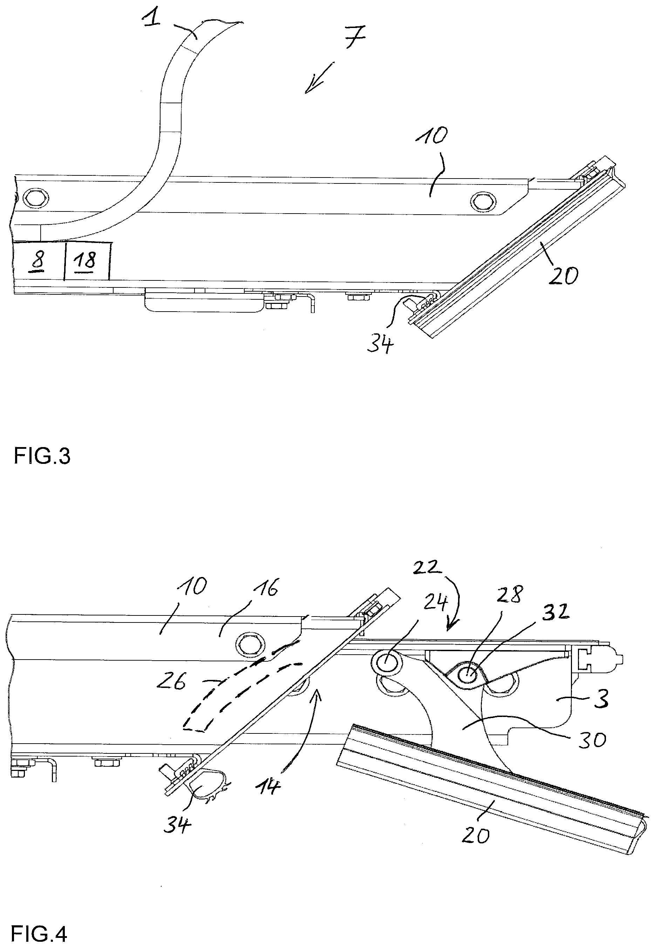

**Fig.3** zeigt die Schiebetrittanordnung 7, welche die an einem Fahrzeugkasten des Schienenfahrzeugs hier bevorzugt bodenseitig befestigbare Schiebetrittkassette 10 mit einer zum Bahnsteig 5 weisenden Kassettenöffnung 14 aufweist, welche am besten anhand von **Fig.4** sichtbar ist, welche den Schiebetritt 3 in einer teilweise ausgefahrenen Position zeigt. Der Schiebetritt 3 ist an der Schiebetrittkassette 10 durch eine hier nicht gezeigte Schiebetrittführungseinrichtung 16 geführt, um in Bezug auf die Schiebetrittkassette 10 zwischen einer eingefahrenen Position und einer ausgefahrenen Position bewegt werden zu können. Insbesondere kann der Schiebetritt 3 durch die Schiebetrittführungseinrichtung 16 entlang eines geraden oder gebogenen Schiebetrittfahrwegs geführt sein.

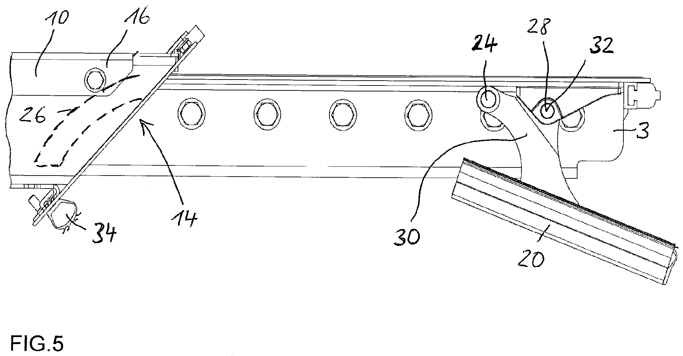

Die Schiebetrittanordnung 7 weist daher den an der Schiebetrittkassette 10 entlang des Schiebetrittfahrwegs zwischen der in **Fig.3** gezeigten eingefahrenen Position und der in **Fig.5** gezeigten ausgefahrenen Endposition beweglich geführten Schiebetritt 3 auf, welcher in der eingefahrenen Position in der Schiebetrittkassette 10 bevorzugt vollständig aufgenommen und mit Hilfe einer hier nicht gezeigten Antriebseinrichtung 18 aus der eingefahrenen Position durch die Kassettenöffnung 14 hindurch in die ausgefahrene Endposition ausfahrbar und aus der mindestens einen ausgefahrenen Endposition in die eingefahrene Position einfahrbar ist.

**Fig.4** zeigt die Schiebetrittanordnung 7 mit dem Schiebetritt 3 in einer teilweise ausgefahrenen Position und **Fig.5** in der vollständig ausgefahrenen Endposition.

Am Schiebetritt 3 ist ein Verschlusselement 20 beweglich gelagert, welches die Kassettenöffnung 14 in der eingefahrenen Position des Schiebetritts 3 verschließt, wie **Fig.3** zeigt. Weiterhin ist als Bestandteil der Schiebetrittanordnung 7 die ein taktiles Element 20 aufweisende Hinderniserfassungseinrichtung 8 vorgesehen, wobei die Hinderniserfassungseinrichtung 8 derart ausgebildet ist, dass bei einer Berührung des taktilen Elements 20 mit einem Hindernis, hier dem Bahnsteig 5 im Laufe der Ausfahrbewegung des Schiebetritts 3 von der eingefahrenen Position in eine ausgefahrene Position eine kritische Position des Schiebetritts 3 in Bezug auf den Bahnsteig 5 erkannt und bei einem solchen Erkennen ein Erfassungssignal erzeugt wird. Denn wie oben bereits beschrieben, stellen Hindernisse wie Bahnsteige 5 innerhalb des Erfassungsraums 4 unterhalb des Schiebetritts 3 und ein Stück weit vor der Stirnseite des Schiebetritts 3 eine kritische Situation dar, die es zu vermeiden gilt.

Das Verschlusselement und das taktile Element als Sensorelement werden hier zusammen durch eine am Schiebetritt mittels einer Führungseinrichtung 22 beweglich geführte Klappe 20 gebildet, wobei die Lage der Klappe 20 relativ zum Schiebetritt 3 und/oder zur Schiebetrittkassette 10 abhängig von der Position des Schiebetritts 3 auf dem Schiebefahrweg ist.

Dabei ist die Führungseinrichtung 22 derart ausgebildet, dass infolge eines Einfahrens des Schiebetritts 3 in die eingefahrene Position die Klappe 20 in eine in **Fig.3** gezeigte Schließposition gebracht wird, in welcher die Klappe 20 die Kassettenöffnung 14 verschließt und infolge eines Ausfahrens aus der eingefahrenen Position in Richtung auf die mindestens eine ausgefahrene Endposition die Klappe 20 eine in **Fig.4** und **Fig.5** gezeigte Erfassungsposition einnimmt, in welcher sich wenigstens ein Abschnitt der Klappe 20 innerhalb des Erfassungsraums 4 befindet, um eventuell in den Erfassungsraum 20 ragende Hindernisse wie den Bahnsteig 5 zu kontaktieren und dann bei einem Kontakt mit dem Bahnsteig 5 das Erfassungssignal zu erzeugen. Die Klappe 20 wird hier bevorzugt durch eine Platte gebildet, wie die Figuren 3 bis 5 zeigen.

Bevorzugt wirkt dann die Hinderniserkennungseinrichtung 8 mit der Antriebseinrichtung 18 für den Schiebetritt 3 derart zusammen, dass nach einer Erzeugung des Erfassungssignals die Antriebseinrichtung 18 angesteuert wird, um den Schiebetritt 3 in einer in Bezug auf den Bahnsteig 5 unkritischen Position zu halten oder den Schiebetritt 3 in eine unkritische Position in Bezug zum Bahnsteig 5 zu bringen. Eine kritische Position des Schiebetritts 3 stellt wie oben beschrieben eine Position dar, in welcher eine Kollision des Schiebetritts mit der Oberfläche des Bahnsteigs 5 oder mit seiner Seitenwand droht oder zu erwarten ist. Eine unkritische Position des Schiebetritts 3 lässt hingegen keine Kollision des Schiebetritts 3 mit dem Bahnsteig erwarten.

Die Hinderniserkennungseinrichtung 8 und die Antriebseinrichtung 18 für den Schiebetritt 3 weisen bevorzugt jeweils eine eigene elektronische Steuerung auf, wobei diese elektronischen Steuerungen dann miteinander kommunizieren oder eine gemeinsame elektronische Steuerung.

Bevorzugt beinhaltet die Führungseinrichtung 22 für die Klappe 20 eine exzentrische Drehlagerung der Klappe 20 am Schiebetritt 3 sowie eine Kulissenführung der Klappe 20 am Schiebetritt 3, wie die **Fig.4** und **Fig.5** zeigen. Dabei schwenkt die Klappe 20 beim Ausfahren des Schiebetritts 3 von der in **Fig.3** gezeigten eingefahrenen Position in irgendeine ausgefahrene Position beispielsweise gemäß **Fig.4** oder **Fig.5** von der in **Fig.3** gezeigten Schließposition in die Erfassungsposition bevorzugt infolge von Eigengewichtskräften. Beim Einfahren des Schiebetritts 3 aus irgendeiner ausgefahrenen Position in die eingefahrene Position schwenkt die Klappe 20 dann durch die Kulissenführung wieder in die Schließposition zurück. Daher stammt die Energie zum Schwenken der Klappe 20 von der Erfassungsposition in die Schließposition von der Antriebseinrichtung 18 des Schiebetritts 3, da die translatorische Bewegung des Schiebetritts 3 und damit der Klappe 20 mit Rolle 24 beim Einfahren in die Schiebetrittkassette 10 mittels der Kulissenführung in eine Schwenkbewegung der Klappe 20 gewandelt wird, wodurch diese von der Erfassungsposition in die Schließposition schwenkt.

Alternativ könnte die Bewegung der Klappe 20 von der Schließposition in die Erfassungsposition und/oder zurück auch durch einen mittelbaren oder unmittelbaren Antrieb der Klappe durch eine eigene Antriebseinrichtung erfolgen.

Die Kulissenführung umfasst hier beispielsweise eine an der Klappe 20 drehbar gelagerte Rolle 24 und eine an der Schiebetrittkassette 10 angeordnete und in Fig.4 und Fig.5 in gestrichelten Linien angedeutete Kulisse 26, wobei beim Einfahren des Schiebetritts 3 in die eingefahrene Position die Rolle 24 in die Kulisse 26 eintaucht und dadurch die Klappe 20 um eine Drehachse 28 einer exzentrischen Drehlagerung der Klappe 20 am Schiebetritt 3 in die Schließposition gedreht wird. Beim Ausfahren des Schiebetritts 3 aus der eingefahrenen Position taucht dann die Rolle 24 aus der Kulisse 26 aus, wodurch die Klappe 20 bevorzugt infolge von Eigengewichtskräften in die Erfassungsposition zurückschwenkt, welche in **Fig.4** und **Fig.5** gezeigt ist.

Die Rolle 24 ist hier beispielsweise an einem Lenker 30 angeordnet, welcher über die exzentrische Drehlagerung am Schiebetritt 3 drehbar gelagert ist und andererseits die Klappe 20 trägt. Die Hebelarmverhältnisse am Lenker 30 sind dabei derart gewählt, dass die Klappe 20 in irgendeiner aus der Schiebetrittkassette 10 ausgefahrenen Position des Schiebetritts 3 ohne Wirken von äußeren Kräften und nur aufgrund der Eigengewichtskräfte automatisch in die Erfassungsposition schwenkt.

Die Kulisse 26 ist bevorzugt an einer Innenwand der Schiebetrittkassette 10 derart angeordnet, dass die Rolle 24 mit einem Einlauf der Kulisse 26 dann fluchtet, wenn sich der Schiebetritt 3 kurz vor dem Einfahren in die eingefahrene Position und die Klappe 20 dabei (noch) in der Erfassungsposition befindet. Dann wird beim weiteren Einfahren des Schiebetritts 3 in die Schiebetrittkassette 10 die Rolle 24 über den Einlauf in die Kulisse 26 eingeführt, um mittels weiterer Führung durch die Kulisse 26 dann die Klappe 20 in die Schließposition zu schwenken.

Die Hinderniserfassungseinrichtung 8 weist beispielsweise ein mit der Klappe 20 gekoppeltes Sensorelement 32 auf, welches eine Bewegung bzw. ein Schwenken der Klappe 20 infolge eines Kontakts mit dem Bahnsteig 5 erkennt. Beispielsweise misst das Sensorelement 32 den Drehwinkel zwischen der Klappe 20 und dem Schiebetritt 3. Wenn dann dieser gemessene Drehwinkel einen vorgegebenen Grenzwinkel überschreitet, dann stellt dies ein Indiz für eine Kollision oder einen Kontakt der Klappe 20 mit einem Bahnsteig 5 im Erfassungsraum 4 dar.

Bevorzugt kann zur Abdichtung der durch die Klappe 20 geschlossenen Kassettenöffnung 14 an einem Rand der Kassettenöffnung 14 ein in Bezug auf den Rand vollständig oder teilweise umlaufendes Dichtungselement 34 angeordnet sein, welches in der Schließposition den Rand der Kassettenöffnung 14 gegen die Klappe 20 dichtet.

Im Rahmen der Erfindung sind auch Ausführungen enthalten, welche beliebige Kombination von Merkmalen der hier beschriebenen Ausführungsformen im Rahmen der Ansprüche enthalten.

### Bezugszeichenliste

- 1: Schienenfahrzeug
- 2: Tür
- 3: Schiebetritt
- 4: Erfassungsraum
- 5: Bahnsteig
- 6: Spalt
- 7: Schiebetrittanordnung
- 8: Hinderniserfassungseinrichtung
- 10: Schiebetrittkassette
- 14: Kassettenöffnung
- 16: Schiebetrittführungseinrichtung
- 18: Antriebseinrichtung
- 20: Klappe
- 22: Führungseinrichtung
- 24: Rolle
- 26: Kulisse
- 28: Drehachse
- 30: Lenker
- 32: Sensorelement
- 34: Dichtungselement

## Patentansprüche

1. Schiebetrittanordnung (7) für ein Fahrzeug oder ein Schienenfahrzeug (1) zur Überbrückung eines Spalts (6) zwischen dem Fahrzeug oder Schienenfahrzeug(1) und einem Bahnsteig (5) oder dergleichen, mit
a) einer an einem Fahrzeugkasten des Fahrzeugs oder Schienenfahrzeugs (1) befestigbaren Schiebetrittkassette (10) mit einer Kassettenöffnung (14),
b) einem an der Schiebetrittkassette (10) entlang eines Schiebetrittfahrwegs zwischen einer eingefahrenen Position und mindestens einer ausgefahrenen Endposition beweglich geführten Schiebetritt (3), welcher in der eingefahrenen Position in der Schiebetrittkassette (10) aufgenommen und mit Hilfe einer Antriebseinrichtung (18) aus der eingefahrenen Position durch die Kassettenöffnung (14) in die mindestens eine ausgefahrene Endposition ausfahrbar und aus der mindestens einen ausgefahrenen Endposition in die eingefahrene Position einfahrbar ist,
c) wenigstens einem am Schiebetritt (3) gelagerten Verschlusselement, welches die Kassettenöffnung (14) in der eingefahrenen Position des Schiebetritts (3) verschließt, **dadurch gekennzeichnet, dass**
d) eine wenigstens ein taktiles Element aufweisende Hinderniserfassungseinrichtung (8) vorgesehen ist, welche derart ausgebildet ist, dass bei einer Berührung des taktilen Elements (20) mit einem Hindernis (5) im Laufe der Ausfahrbewegung des Schiebetritts (3) von der eingefahrenen Position in die mindestens eine ausgefahrene Endposition eine kritische Position des Schiebetritts (3) in Bezug auf das Hindernis (5) erkannt und bei einem solchen Erkennen ein Erfassungssignal erzeugt wird, wobei
e) das Verschlusselement und das taktile Element zusammen durch eine mittels einer Führungseinrichtung (22, 24, 26) derart beweglich geführten Klappe (20) gebildet werden, dass die Lage der Klappe (20) relativ zum Schiebetritt (3) und/oder zur Schiebetrittkassette (10) abhängig von der Position des Schiebetritts (3) auf dem Schiebefahrweg ist, wobei
f) die Führungseinrichtung (22, 24, 26) derart ausgebildet ist, dass infolge eines Einfahrens des Schiebetritts (3) in die eingefahrene Position die Klappe (20) in eine Schließposition gebracht wird, in welcher die Klappe (20) die Kassettenöffnung (14) verschließt und infolge eines Ausfahrens aus der eingefahrenen Position in Richtung auf die mindestens eine ausgefahrene Endposition die Klappe (20) eine Erfassungsposition einnimmt, in welcher sich wenigstens ein Abschnitt der Klappe (20) innerhalb eines Erfassungsraums (4) befindet, um ein eventuell in den Erfassungsraum (4) ragende Hindernis (5) zu kontaktieren und dann bei einem Kontakt mit dem Hindernis (5) das Erfassungssignal zu erzeugen.

2. Schiebetrittanordnung nach Anspruch 1, **dadurch gekennzeichnet, dass** der Erfassungsraum (4) unterhalb des Schiebetritts (3) und/oder vor dem Schiebetritt (3) angeordnet ist und/oder ein freies Ende des Schiebetritts (3) ein Stück weit überragt.

3. Schiebetrittanordnung nach einem der vorhergehenden Ansprüche, **dadurch gekennzeichnet, dass** die Klappe (20) durch eine Platte gebildet wird.

4. Schiebetrittanordnung nach einem der vorhergehenden Ansprüche, **dadurch gekennzeichnet, dass** die Führungseinrichtung (22, 24, 26) ausgebildet ist, dass das Einfahren des Schiebetritts (3) in die Schiebetrittkassette (10) eine Bewegung der Klappe (20) aus der Erfassungsposition in die Schließposition und das Ausfahren des Schiebetritts (3) aus der Schiebetrittkassette (10) eine Bewegung der Klappe (20) aus der Schließposition in die Erfassungsposition zumindest initiiert.

5. Schiebetrittanordnung nach einem der vorhergehenden Ansprüche, **dadurch gekennzeichnet, dass** die Führungseinrichtung (22) eine exzentrische Drehlagerung der Klappe (20) am Schiebetritt (3) sowie eine Kulissenführung der Klappe (20) am Schiebetritt (3) beinhaltet, derart, dass
a) beim Ausfahren des Schiebetritts (3) in die mindestens eine ausgefahrene Endposition die Klappe (20) von der Schließposition in die Erfassungsposition schwenkt, und dass
b) beim Einfahren des Schiebetritts (3) in die eingefahrene Position die Klappe (20) durch die Kulissenführung in die Schließposition geschwenkt wird.

6. Schiebetrittanordnung nach Anspruch 5, **dadurch gekennzeichnet, dass** die Kulissenführung wenigstens eine an der Klappe (20) gelagerten Vorsprung (24) und wenigstens eine an der Schiebetrittkassette (10) angeordnete Kulisse (26) beinhaltet, derart, dass
a) beim Einfahren des Schiebetritts (3) in die eingefahrene Position der Vorsprung (24) in die Kulisse (26) eintaucht und dadurch die Klappe (20) um eine Drehachse (28) der exzentrischen Drehlagerung in die Schließposition gedreht wird, und wobei
b) beim Ausfahren des Schiebetritts (3) aus der eingefahrenen Position der Vorsprung (24) aus der Kulisse (26) austaucht und dadurch die Klappe (20) in die Erfassungsposition schwenkt.

7. Schiebetrittanordnung nach Anspruch 6, **dadurch gekennzeichnet, dass** der wenigstens eine an der Klappe (20) gelagerte Vorsprung (24) eine an der Klappe drehbar gelagerte Rolle beinhaltet.

8. Schiebetrittanordnung nach einem der vorhergehenden Ansprüche, **dadurch gekennzeichnet, dass** die Hinderniserfassungseinrichtung (8) wenigstens ein mit der Klappe (20) gekoppeltes Sensorelement (32) aufweist, zur Erfassung der Bewegung der Klappe (20) infolge eines Kontakts mit einem Hindernis (5).

9. Schiebetrittanordnung nach Anspruch 8, **dadurch gekennzeichnet, dass** das Sensorelement (32) zur Messung des Drehwinkels zwischen der Klappe (20) und dem Schiebetritt (3) konfiguriert ist.

10. Schiebetrittanordnung nach einem der vorhergehenden Ansprüche, **dadurch gekennzeichnet, dass** der Schiebetritt (3) an der Schiebetrittkassette (10) durch eine Schiebetrittführungseinrichtung (16) geführt ist.

11. Schiebetrittanordnung nach Anspruch 10, **dadurch gekennzeichnet, dass** der Schiebetritt (3) durch die Schiebetrittführungseinrichtung (16) entlang eines geraden oder gebogenen Schiebetrittfahrwegs geführt ist.

12. Schiebetrittanordnung nach einem der vorhergehenden Ansprüche, **dadurch gekennzeichnet, dass** an einem Rand der Kassettenöffnung (14) und/oder an der Klappe (20) wenigstens ein Dichtungselement (34) angeordnet ist, welches den Rand der Kassettenöffnung (14) gegen die Klappe (20) dichtet.

13. Schiebetrittanordnung nach einem der vorhergehenden Ansprüche, **dadurch gekennzeichnet, dass** die Hinderniserkennungseinrichtung (8) mit der Antriebseinrichtung (18) derart zusammen wirkt, dass nach einer Erzeugung des Erfassungssignals die Antriebseinrichtung (18) angesteuert wird, um den Schiebetritt (3) in Bezug auf das erfasste Hindernis (5) in einer unkritischen Position zu halten oder in eine unkritische Position zu bringen.

14. Fahrzeug, insbesondere Schienenfahrzeug (1) mit wenigstens einer Schiebetrittanordnung (7) nach einem der vorhergehenden Ansprüche.

## Claims

1. Sliding step assembly (7) for a vehicle or a rail vehicle (1) for bridging a gap (6) between the vehicle or rail vehicle (1) and a platform (5) or similar, having
a) a sliding step cassette (10) which can be fixed to an undercarriage of the vehicle or rail vehicle (1), with a cassette opening (14),
b) a sliding step (3) guided on the sliding step cassette (10) so as to be movable along a sliding step displacement path between a retracted position and at least one fully extended position, the sliding step (3) being accommodated in the sliding step cassette (10) in the retracted position and being movable by means of a drive device (18) through the cassette opening (14) from the retracted position into the at least one fully extended position, and from the at least one fully extended position into the retracted position,
c) at least one closure element mounted on the sliding step (3), which closes the cassette opening (14) when the sliding step (3) is in the retracted position, **characterised in that**
d) at least one obstacle detection means (8) is provided, having a touch-sensitive element, which is designed in such a way that, upon contact of the touch-sensitive element (20) with an obstacle (5) during the extension movement of the sliding step (3) from the retracted position into the at least one fully extended position, a critical position of the sliding step (3) in relation to the obstacle (5) is detected and, in the event of such a detection, a detection signal is generated, wherein
e) the closure element and the touch-sensitive element are formed together by a cover flap (20) movably guided by means of a guide device (22, 24, 26) in such a way that the position of the cover flap (20) relative to the sliding step (3) and / or the sliding step cassette (10) is dependent on the position of the sliding step (3) on the sliding path, wherein
f) the guide device (22, 24, 26) is designed so that, as a result of the sliding step (3) being moved into the retracted position, the cover flap (20) is brought into a closed position, in which the cover flap (20) closes the cassette opening (14) and, as a result of movement from the retracted position in the direction of the at least one fully extended position, the cover flap (20) assumes a detection position, in which at least a portion of the cover flap (20) lies within a detection area (4), in order to make contact with any obstacle (5) that may be present in the detection area (4) and then, in the event of such contact with the obstacle (5), to generate the detection signal.

2. Sliding step assembly according to claim 1, **characterised in that** the detection area (4) is arranged below the sliding step (3) and / or in front of the sliding step (3) and / or projects slightly beyond an exposed end of the sliding step (3).

3. Sliding step assembly according to one of the preceding claims, **characterised in that** the cover flap (20) is formed by a plate.

4. Sliding step assembly according to one of the preceding claims, **characterised in that** the guide device (22, 24, 26) is designed so that the retraction of the sliding step (3) into the sliding step cassette (10) at least initiates a movement of the cover flap (20) from the detection position into the closed position, and the extension of the sliding step (3) out of the sliding step cassette (10) at least initiates a movement of the cover flap (20) from the closed position into the detection position.

5. Sliding step assembly according to one of the preceding claims, **characterised in that** the guide device (22) contains an eccentric rotary bearing of the cover flap (20) on the sliding step (3) and also a sliding block guide of the cover flap (20) on the sliding step (3) in such a way that
a) upon extension of the sliding step (3) into the at least one fully extended position, the cover flap (20) pivots from the closed position into the detection position, and
b) upon retraction of the sliding step (3) into the retracted position, the cover flap (20) is pivoted by the sliding block guide into the closed position.

6. Sliding step assembly according to claim 5, **characterised in that** the sliding block guide contains at least one projection (24) mounted on the cover flap (20) and at least one sliding block (26) arranged on the sliding step cassette (10) in such a way that
a) upon retraction of the sliding step (3) into the retracted position, the projection (24) goes into the sliding block (26) and the cover flap (20) is thereby pivoted about an axis of rotation (28) of the eccentric rotary bearing into the closed position, and wherein
b) upon extension of the sliding step (3) from the retracted position, the projection (24) emerges from the sliding block (26) and thereby pivots the cover flap (20) into the detection position.

7. Sliding step assembly according to claim 6, **characterised in that** the at least one projection (24) mounted on the cover flap (20) contains a roller mounted rotationally on the cover flap.

8. Sliding step assembly according to one of the preceding claims, **characterised in that** the obstacle detection means (8) has at least one sensor element (32) coupled to the cover flap (20) for detecting the movement of the cover flap (20) as a result of contact with an obstacle (5)

9. Sliding step assembly according to claim 8, **characterised in that** the sensor element (32) is designed to measure the rotation angle between the cover flap (20) and the sliding step (3).

10. Sliding step assembly according to one of the preceding claims, **characterised in that** the sliding step (3) is guided on the sliding step cassette (10) by a sliding step guide device (16).

11. Sliding step assembly according to claim 10, **characterised in that** the sliding step (3) is guided by the sliding step guide device (16) along a straight or bent sliding step displacement path.

12. Sliding step assembly according to one of the preceding claims, **characterised in that** at least one sealing element (34), which seals the edge of the cassette opening (14) against the cover flap (20), is arranged on an edge of the cassette opening (14) and / or on the cover flap (20).

13. Sliding step assembly according to one of the preceding claims, **characterised in that** the obstacle detection means (8) interacts with the drive device (18) such that, after the detection signal has been generated, the drive device (18) is activated in order to hold the sliding step (3) in a position that is non-critical in relation to the detected obstacle (5), or to bring it into such a position.

14. Vehicle, in particular rail vehicle (1), having at least one sliding step assembly (7) according to one of the preceding claims.

## Revendications

1. Agencement (7) de marchepied coulissant d'un véhicule ou d'un véhicule (1) ferroviaire pour jeter un pont sur un intervalle (6) entre le véhicule ou le véhicule (1) ferroviaire et un quai (5) ou analogue, comprenant
a) un caisson (10) de marchepied coulissant qui peut être fixé à une caisse du véhicule ou du véhicule (1) ferroviaire et qui a une ouverture (14) de caisson,
b) un marchepied (3) coulissant guidé de manière mobile sur le caisson (10) du marchepied coulissant le long d'un trajet de déplacement du marchepied coulissant entre une position rentrée et au moins une position d'extrémité sortie, marchepied (3) coulissant qui, dans la position rentrée, est reçu dans le caisson (10) de marchepied coulissant et peut à l'aide d'un dispositif (18) d'entraînement passer de la position rentrée à la au moins une position d'extrémité sortie par l'ouverture (14) du caisson et entrer de la au moins une position d'extrémité sortie à la position rentrée,
c) au moins un élément de fermeture, qui est monté sur le marchepied (3) coulissant et qui ferme une ouverture (14) du caisson dans la position rentrée du marchepied (3) coulissant, **caractérisé en ce que**
d) un dispositif (8) de détection d'obstacle est prévu, ayant au moins un élément tactile, qui est constitué de manière à ce que, lorsque l'élément (20) tactile touche l'obstacle (5) au cours du mouvement de sortie du marchepied (3) coulissant de la position rentrée à la au moins une position d'extrémité sortie, une position critique du marchepied (3) coulissant par rapport à l'obstacle (5) soit reconnue et, s'il y a une reconnaissance de ce genre, un signal de détection soit produit, dans lequel
e) l'élément de fermeture et l'élément tactile sont formés ensemble par un volet (20) guidé de manière mobile au moyen d'un dispositif (22, 24, 26) de guidage de manière à ce que la position du volet (20) par rapport au marchepied (3) coulissant et/ou par rapport au caisson (10) de marchepied coulissant dépende de la position du marchepied (3) coulissant sur le trajet de coulissement, dans lequel
f) le dispositif (22, 24, 26) de guidage est constitué de manière **en ce qu'**à la suite d'une entrée du marchepied (3) coulissant dans la position rentrée le volet (20) soit mis dans une position de fermeture, dans laquelle le volet (10) ferme l'ouverture (14) du caisson, et à la suite d'une sortie de la position rentrée en direction de la au moins une position d'extrémité sortie le volet (20) prenne une position de détection dans laquelle au moins une partie du volet (20) se trouve à l'intérieur d'un espace (40) de détection, pour venir en contact avec un obstacle (5) faisant saillie éventuellement dans l'espace (4) de détection et pour produire ensuite, s'il y a un contact avec l'obstacle (5), le signal de détection.

2. Agencement de marchepied coulissant suivant la revendication 1, **caractérisé en ce que** l'espace (4) de détection est disposé en-dessous du marchepied (3) coulissant et/ou devant le marchepied (3) coulissant et/ou une extrémité libre du marchepied (3) coulissant dépasse un peu.

3. Agencement de marchepied coulissant suivant l'une des revendications précédentes, **caractérisé en ce que** le volet (20) est formé d'une plaque.

4. Agencement de marchepied coulissant suivant l'une des revendications précédentes, **caractérisé en ce que** le dispositif (22, 24, 26) de guidage est constitué de manière à ce que la rentrée du marchepied (3) coulissant dans le caisson (10) de marchepied coulissant fait débuter un déplacement du volet (20) de la position de détection à la position de fermeture et de manière à ce que la sortie du marchepied (3) coulissant du caisson (10) de marchepied coulissant fait commencer au moins un déplacement du volet (20) de la position de fermeture à la position de détection.

5. Agencement de marchepied coulissant suivant l'une des revendications précédentes, **caractérisé en ce que** le dispositif (22) de guidage comporte un montage à pivotement excentré du volet (20) sur le marchepied (3) coulissant, ainsi qu'un guidage à coulisse du volet (20) sur le marchepied (3) coulissant de manière à ce que,
a) lorsque le marchepied (3) coulissant sort dans la au moins une position d'extrémité sortie, le volet (20) pivote de la position de fermeture à la position détection, et de manière à ce que,
b) lorsque le marchepied (3) coulissant rentre dans la position rentrée, le volet (20) est pivoté dans la position de fermeture par le guidage à coulisse.

6. Agencement de marchepied coulissant suivant la revendication 5, **caractérisé en ce que** le guidage à coulisse comporte au moins une saillie (24) montée sur le volet (20) et au moins une coulisse (26) montée sur le caisson (10) de marchepied coulissant de manière à ce que,
a) lorsque le marchepied (3) coulissant rentre dans la position rentrée, la saillie (24) pénètre dans la coulisse (26) et ainsi le volet (20) tourne autour d'un axe (28) de rotation du montage excentré à pivotement pour venir dans la position de fermeture et dans lequel,
b) lorsque le marchepied (3) coulissant sort de la position rentrée, la saillie (24) sort de la coulisse (26) et ainsi le volet (20) pivote dans la position de détection.

7. Agencement de marchepied coulissant suivant la revendication 6, **caractérisé en ce que** la au moins une saillie (24) montée sur le volet (20) comporte un galet monté tournant sur le volet.

8. Agencement de marchepied coulissant suivant l'une des revendications précédentes, **caractérisé en ce que** le dispositif (8) de détection d'obstacle a au moins un élément (32) capteur adjoint au volet (20) pour la détection du volet (20) en raison d'un contact avec un obstacle (5).

9. Agencement de marchepied coulissant suivant la revendication 8, **caractérisé en ce que** l'élément (32) capteur est configuré pour la mesure de l'angle de rotation entre le volet (20) et le marchepied (3) coulissant.

10. Agencement de marchepied coulissant suivant l'une des revendications précédentes, **caractérisé en ce que** le marchepied (3) coulissant est guidé sur le caisson (10) de marchepied coulissant par un dispositif (16) de guidage de marchepied coulissant.

11. Agencement de marchepied coulissant suivant la revendication 10, **caractérisé en ce que** le marchepied (3) coulissant est guidé par le dispositif (16) de guidage de marchepied coulissant le long d'un trajet de déplacement de marchepied coulissant rectiligne ou incurvé.

12. Agencement de marchepied coulissant suivant l'une des revendications précédentes, **caractérisé en ce que** sur un bord de l'ouverture (14) du caisson et/ou sur le volet (20) est disposé au moins un élément (34) d'étanchéité, qui rend étanche le bord de l'ouverture (14) du caisson par rapport au volet (20).

13. Agencement de marchepied coulissant suivant l'une des revendications précédentes, **caractérisé en ce que** le dispositif (8) de reconnaissance d'obstacle coopère avec le dispositif (18) d'entraînement de manière à commander, après la production du signal de détection, le dispositif (18) d'entraînement pour maintenir le marchepied (3) coulissant par rapport à l'obstacle (5) détecté dans une position non critique ou pour le mettre dans une position non critique.

14. Véhicule, notamment véhicule (1) ferroviaire, ayant au moins un agencement (7) de marchepied coulissant suivant l'une des revendications précédentes.
